Europäisches Patentamt

European Patent Office

Office européen des brevets

(11) Publication number: 0 332 736
A2

# (12) EUROPEAN PATENT APPLICATION

(21) Application number: 88115672.3

(51) Int. Cl.⁴: B60J 3/02

(22) Date of filing: 23.09.88

(30) Priority: 16.03.88 JP 62293/88

(43) Date of publication of application:
20.09.89 Bulletin 89/38

(84) Designated Contracting States:
DE GB IT

(71) Applicant: ASAMA CORPORATION
1-294 Kamimura Kitaowaribe
Nagano City Nagano Pref.(JP)

(72) Inventor: Yamada, Masatoshi
1843 Ooaza, Inaba,
Nagano City, Nagano Prefecture(JP)

(74) Representative: Sunderland, James Harry
HASELTINE LAKE & CO Hazlitt House 28
Southampton Buildings Chancery Lane
London WC2A 1AT(GB)

(54) Sun visor device.

(57) A sun visor device, for example for an automobile, includes a flap plate (3, 4) formed to be semitransparent and having a transparency which varies in a vertical direction across the plate. The flap plate (3, 4) is disposed in a region near a roof (2) of the automobile so that the flap plate can be moved selectively to an in-use position and to a not-in-use position. The flap plate (3, 4) can be configured to be moved swingably (3) or slidably (4) and, particularly in the case of the slidable flap plate (4), the flap plate (4) can be received into the roof (2) of the automobile

FIG.1

FIG.6

EP 0 332 736 A2

## Sun visor device.

The present invention relates to a sun visor device. for example for an automobile.

A sun visor device provided with a flap which is swingably disposed within a region near the roof of an automobile, so that the flap can be swung up or retracted to overlap with the inner surface of the roof when not in use, and so that the flap can be swung (pulled) down into a position near to and covering an upper portion of a front glass (windscreen) when in use, to shade sunlight coming into the automobile from the front (in the normal direction of travel) is known and disclosed in, for example, Japanese Utility Model Unexamined Publication Nos. 60-1620 and 60-18823.

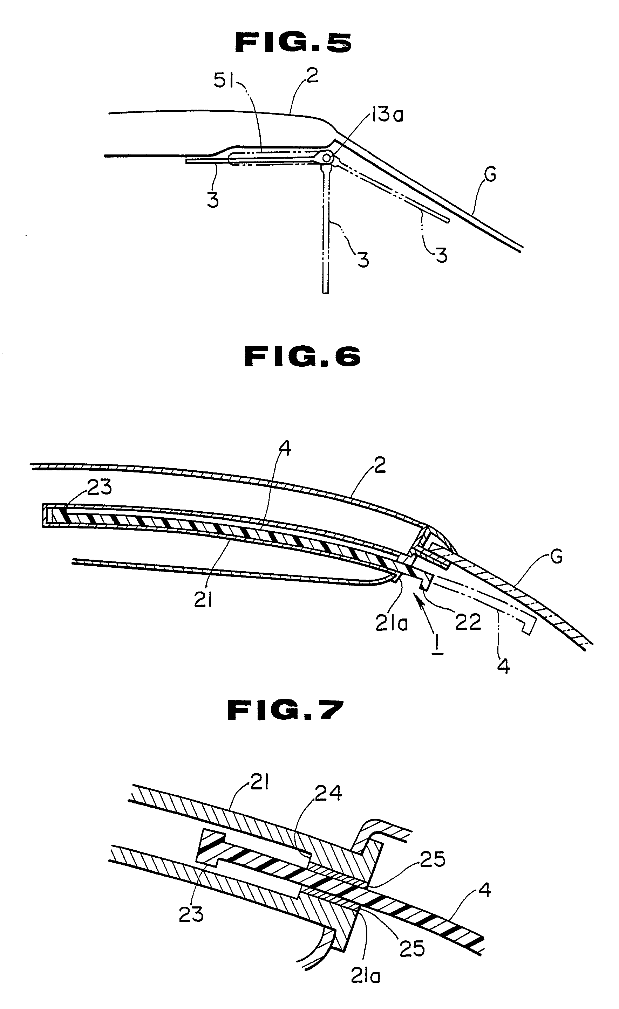

The sun visor disclosed in the above publications employs a flap (indicated in chain-line outline at 51 in Fig. 5) formed of the same material as that of the interior surface of the roof 2, attaching importance to the interior design of the automobile. Accordingly, the flap is entirely non-transparent. When the sun visor is not in use, the visual range of the automobile driver, for example, extends over the entire front glass (windscreen) G, whereas when the sun visor is swung down to extend substantially in parallel with the inner surface of the front glass (windscreen) G, to use the sun visor, the visual range is reduced by about half as compared with that when the sun visor is not in use. Furthermore, when the sun visor is set in a substantially vertical disposition, in accordance with the incident angle of sunlight, for instance at sunrise or sunset, the visual range is extremely reduced, by one or more orders. making it difficult to see and check traffic signals and road signs, thereby reducing driving safety. In order to ensure that a certain extent of visual range is always retained, the effective area of the flap must be reduced and it is then not adequate to shade sunlight.

Consequently, such a conventional sun visor device has an inevitable defect in that it must be structured to compromise between safety and shading effect.

An embodiment of the present invention can provide a sun visor device, for instance for a vehicle, e.g. an automobile, which is excellent from the point of view of safety and which does not obstruct or substantially obstruct the visual range by use of a flap plate.

An embodiment of the present invention can provide a sun visor device, for example for an automobile, which can provide a sufficient area of shading of sunlight with an exact or more exact shading effect.

An embodiment of the present invention can provide a sun visor device for a vehicle (e.g. an automobile), offering easy attachment to existing automobiles, excellent general applicability, good configuration of the inside passenger compartment of the automobile and easy adjustment of the area of shading sunlight.

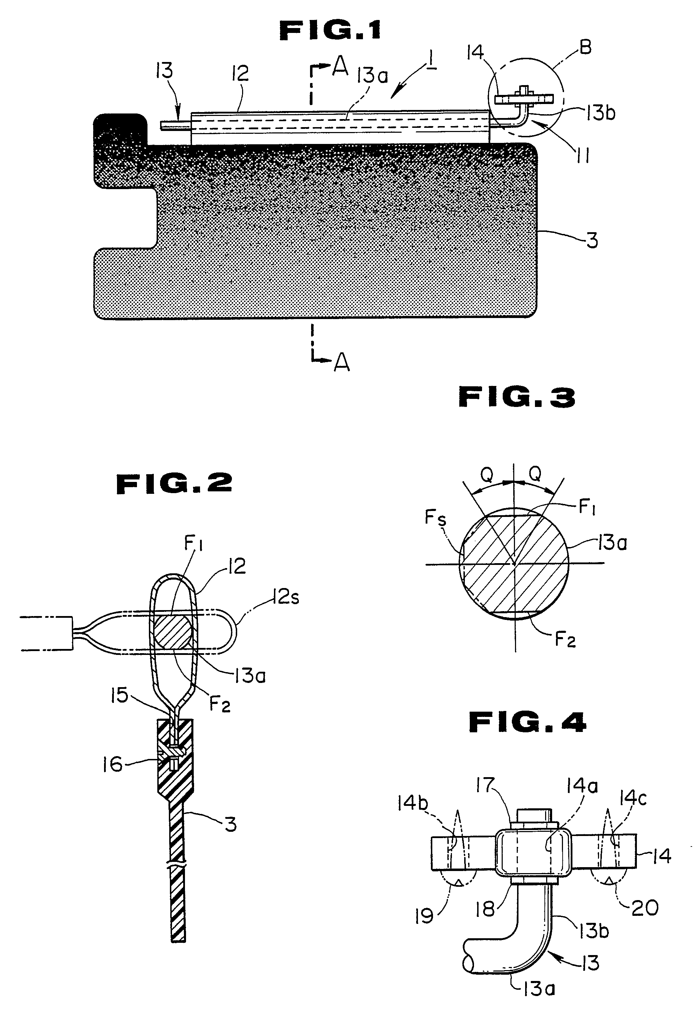

In exemplary embodiments of the present invention, a rigid flap plate (3 - Fig. 1) is swingably disposed or a flexible flap plate (4 - Fig. 6) is slidably disposed within the passenger compartment of an automobile below the roof (2) of the compartment and the flap plate (3 or 4) described above is formed to be at least partially semitransparent and to have different transparencies at different positions over its extent. The flap plate (3 and 4) can be selectively moved to in-use and out-of-use positions. The transparency of the flap plate (3 and 4) may change continuously and/or may also change discontinuously in a vertical direction (e.g. going upwards towards the automobile roof) so that the transparency of the upper portion thereof is gradually made smaller.

With such a configuration, the front of the automobile, in the normal travelling direction, can be seen and observed through the flap plate (3 or 4) maintaining a full, or nearly full, field of vision. Further, when the flap plate is so formed as to be semitransparent, the transparency thereof can be appropriately selected properly so that the sunlight can be shaded to prevent the glare thereof.

In some cases part of the flap plate may be substantially opaque.

Of course, embodiments of the present invention may be used in vehicles other than automobiles and it is possible that they may find use in static structures.

Reference is made by way of example, to the accompanying drawings, in which:-

Fig. 1 is a front view of a sun visor device according to a first embodiment of the present invention;

Fig. 2 is a sectional view of the sun visor device taken along line A-A of Fig. 1;

Fig. 3 is a sectional view of a horizontal shaft part of a support shaft of the sun visor device shown in Fig. 1;

Fig. 4 is an enlarged view of a portion B of the sun visor device shown in Fig. 1;

Fig. 5 illustrates operation of the sun visor device shown in Fig. 1;

Fig. 6 is a sectional side view of a sun visor device according to a second embodiment of the present invention;

Fig. 7 is an enlarged sectional view of the vicinity of an opening of a case of the sun visor device shown in Fig. 6;

Fig. 8 is a sectional side view of a sun visor device according to a modification of the second embodiment;

Fig. 9 is a sectional side view of a sun visor device according to another modification of the second embodiment; and

Fig. 10 is a side view schematically illustrating a sun visor device according to a further modification of the second embodiment.

Referring now to Figs. 1 to 5, a sun visor device 1 according to a first embodiment of the present invention will be described. This embodiment illustrates a sun visor device including a flat plate 3 which is swingably mounted.

The flap plate 3 is formed of relatively rigid material, which is desirably heat-resisting, such as acrylic, polycarbonatic plate or glass plate and is formed into a generally substantially rectangular shape as a whole. The flap plate 3 is formed to be semitransparent, and the flap plate 3 is desirably formed so that the transparency of the upper portion gradually decreases in the vertical direction towards the top of the plate (towards the mounting of the flap plate) and particularly the lower portion thereof is almost transparent. Thus, the driver (or front seat passenger) can see through the flap in accordance with the transparency. Further, in this embodiment, the length of the flap plate 3 in the vertical direction is selected to be longer than that of a conventional flap plate 51 shown in Fig. 5. Even when the length is selected to be longer in this manner, forward vision is not excessively hindered and the area of shading of sunlight can be extended further, to enhance the shading effect, since the flap plate 3 is formed to be semitransparent. The material of the flap plate may possess flexibility to the extent that operation is not prevented when the flap plate 3 is operated by hand.

A support unit 11 is coupled with the upper side of the flap plate 3 to support the flap plate 3 swingably. The support unit 11 comprises a support pipe 12 formed into a compressed ring in section (refer to Fig. 2), a support shaft 13 inserted into the support pipe 12 to be supported by the support line 12 for supporting the flap plate 3 swingably, and a mounting base 14 for supporting an end of the support shaft 13 swingably. An overlapped end portion of the support pipe 12 is inserted into a slit 15 formed in an end of the upper side of the flap plate 3 along the longitudinal direction thereof as shown in Fig. 2 and is fixedly mounted to the flap plate 3 by screws 16. The support shaft 13 is bent to be formed into an L-shape and includes a horizontal shaft 13a and a vertical shaft 13b. The horizontal shaft 13a is formed with parallel flat surfaces F1 and F2 as shown in Fig. 3 and is inserted into the support pipe 12 swingably. Further, as shown in Fig. 3, the formation range or angular extent of the flat surfaces F1 and F2, that is angles Q subtended by both sides of the flat surfaces F1 and F2 at the centre of the shaft 13a are desirably equal to about 15 degrees and the flat surfaces F1 and F2 are substantially parallel with the inner surface of the roof 2 of the automobile when the device is mounted in place in an automobile. One of the peripheries of the shaft 13a between the flat surfaces F1 and F2 may be formed with polygonal surfaces Fs to hold the support pipe 12 at any angle in a click-stop manner.

Accordingly, as indicated by chain lines in Fig. 2, when the inner surfaces of the support pipe 12s are overlapped on the flat surfaces F1 and F2 of the horizontal shaft 13a, the flap plate 3 overlaps or lays alongside to the inner surface of the roof of the automobile. Arrangements may be made such that when the angle of the flap plate 3 with regard to the inner surface of the roof 2 is smaller than the angle Q, the flap plate 3 is automatically brought into position overlapping the inner surface of the roof 2 and held in that position, by means of a spring. When the flap plate 3 is rotated downward and the angle of the flap plate 3 exceeds the angle Q, the flap plate 3 can be stopped at any angle to shade the sunlight (refer to Fig. 5).

The vertical shaft 13b of the support shaft 13 is inserted into a support hole 14a formed in the mounting base 14 as shown in Fig. 4 and is fixed at upper and lower portions thereof by E-rings 17 and 18. Thus, vertical movement of the flap plate 3 is restricted while horizontal movement around the vertical shaft 13b is allowed to shade sunlight coming from the side portion of the automobile (i.e. the flap plate, with the support pipe and shaft, can be swung round from a disposition in which the flap plate, when down, shades a windscreen, to a disposition in which the flap plate, when down, shades a side window). In Fig. 4, numerals 14b and 14c denote holes for mounting the base 14 to the inner surface of the roof 2 by screws 19 and 20.

Referring now to Figs. 6 to 10, a sun visor device 1 according to a second embodiment of the present invention will be described. This embodiment illustrates a sun visor device including a flap plate 4 which is slidably mounted.

The flap plate 4 is formed of a plate of synthetic resin such as an acrylic plate flexible as a whole. The flap plate 4 is formed to be substantially rectangular and semitransparent. The conditions concerning the semitransparent configuration can be selected in the same manner as those of the flap plate 3 shown in Fig. 1. A case or housing 21 having an opening 21a formed in the front end thereof is embedded into the roof 2. The opening 21a is positioned substantially in the front end of the roof 2. The flap plate 4 is received in the case 21 and the front end of the flap plate 4 is exposed from the opening 21a. A protruding grip portion 22 which can be operated by hand is integrally formed at the front end of the flap plate 4 and a protruding stopper portion 23 which prevents the flap plate 4 from being removed from the case 21 is also integrally formed at the rear end of the flap plate 4. Accordingly, a flange 24 with which the stopper portion 23 can engage is integrally formed in the front end of the case 21 and the inner periphery of the opening 21a is provided with a sealing member 25 which removes dust on the flap plate 4 and prevents dust from entering the case 21.

Accordingly, when the grip portion 22 is operated by hand and the flap plate 4 is pulled out of the case 21, the flap plate 4 can be set in an in-use position in which the flap plate 4 overlaps the inner surface of the front glass (windscreen) G. In this case, since the flap plate 4 is flexible, the flap plate 4 can be pulled out along the angle (contour) of the windscreen G. Further, when the flap plate 4 is pushed into the case 21, almost all of the flap plate 4 can be inserted into the case. With such a slidable flap plate 4, since the whole of the sun visor device can be retracted into the roof 2, the configuration or design in the passenger compartment of the automobile is not adversely affected and the length of the pulled-out flap plate 4, that is, the area of shading the sunlight can be adjusted easily.

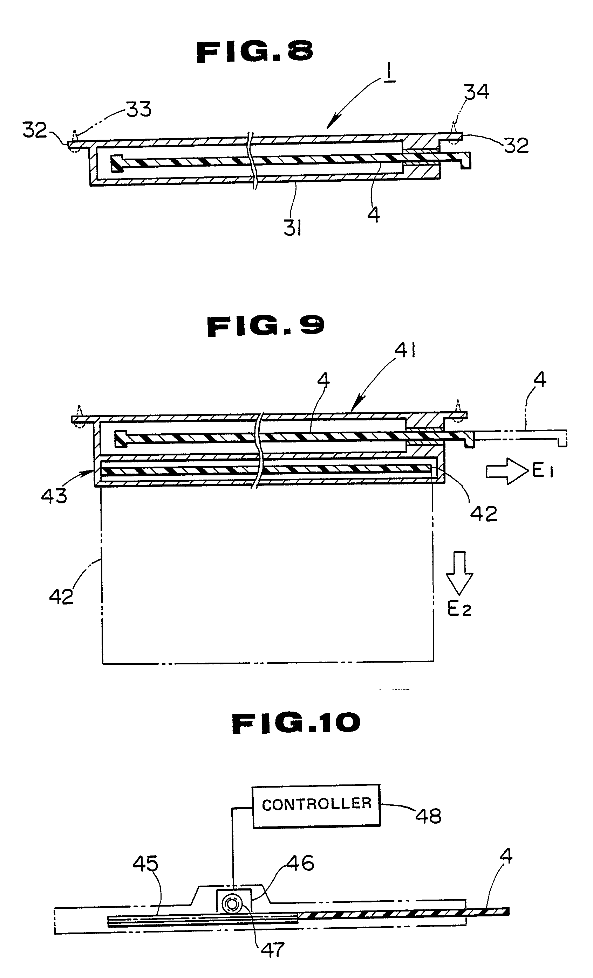

Fig. 6 shows the case 21 embedded into the roof 2. Alternatively, a separate case 31 may be provided as shown in Fig. 8. The case 31 is formed with a flange 32 and is mounted on the inner surface of the roof 2 by fixing the flange 32 thereto by screws 33 and 34.

Further, as shown in Fig. 9, a case 41 having two case portions may be provided, with one case portion 43 thereof receiving a flap plate 42 for a vehicle side window (side door), which plate can be pulled out to the side. In this case, the flap plate 42 can be pulled out in a direction perpendicular to the pull-out direction (shown by arrow E1) of the flap plate 4 on the side of the front glass G and in the horizontal direction (shown by arrow E2).

Furthermore, Figs. 6 to 9 show the flap plate operated manually. Alternatively, the flap plate can be configured to be driven by a motor as shown in Fig. 10. When the flap plate is driven by a motor, a flexible rack 45 is coupled with the rear end of the flap plate 4 as shown in Fig. 10 and a pinion 47 of a motor driving unit 46 including a reduction mechanism and a motor is meshed with the rack 45. In addition, a controller 48 which controls the motor driving unit 46 and includes an operation switch is provided.

An embodiment of the present invention provides a sun visor device, for example for an automobile, which includes a flap plate formed to be semitransparent and having a transparency which varies in a vertical direction across the plate. The flap plate is disposed in a region near a roof of the automobile so that the flap plate can be moved selectively to an in-use position and to a not-in-use position. The flap plate can be configured to be moved swingably or slidably and, particularly in the case of the slidable flap plate, the flap plate can be received into the roof of the automobile.

## Claims

1. A sun visor device, for example for an automobile, comprising a flap plate (3, 4) which is rigid or flexible and formed to be semitransparent at least in part, to have a transparency which changes over the extent of the plate, and mounting means (11, 12, 13, 14; 21; 31, 41) on which the flap plate (3, 4) is displaceably mounted so that the plate can be selectively moved to in-use and not-in-use positions.

2. A sun visor device as claimed in claim 1, wherein the flap plate (3) is rigid and the mounting means (11, 12, 13, 14) mount the flap plate (3) so that it is swingably disposed and can be selectively swung to in-use and out-of-use positions.

3. A sun visor device as claimed in claim 1, wherein the flap plate (4) is flexible and the mounting means (21; 31; 41) mount the flap plate (4) so that it is slidably disposed and can be selectively slid to in-use and out-of-use positions.

4. A sun visor device as claimed in claim 3, wherein the flap plate (4) is formed with a grip portion capable of being operated by hand.

5. A sun visor device as claimed in claim 3, further comprising motor drive means (45, 46, 47) for moving the flap plate (4) between in-use and out-of-use positions and a controller (48) for controlling the motor driving means.

6. A sun visor device as claimed in any preceding claim, wherein the transparency of the flap plate (3, 4) changes continuously or discontinuously across the plate, and the transparency of a portion of the flap plate made gradually smaller towards one edge of the plate.

7. A sun visor device as claimed in any preceding claim, mounted in an automobile near the roof (2) of the passenger compartment of the automobile.

8. A sun visor device as claimed in claim 7 when read as directly or indirectly appended to claim 3, wherein the flap plate 4 is disposed to be received into the roof (2) of the automobile

# FIG.1

# FIG.2

# FIG.3

# FIG.4

EP 0 332 736 A2

# FIG.5

# FIG.6

# FIG.7

# FIG.8

# FIG.9

# FIG.10

CONTROLLER ~ 48